## Europäisches Patentamt
## European Patent Office
## Office européen des brevets

(11) Publication number: **0 127 986**
**A2**

(12) ## EUROPEAN PATENT APPLICATION

(21) Application number: **84303531.2**

(22) Date of filing: **24.05.84**

(51) Int. Cl.³: **B 60 K 9/04**

(30) Priority: **01.06.83 IL 68838**
**15.07.83 IL 69231**
**05.12.83 IL 70381**

(43) Date of publication of application:
**12.12.84 Bulletin 84/50**

(84) Designated Contracting States:
**AT BE CH DE FR GB IT LI LU NL SE**

(71) Applicant: **INDUSTRIES DEVELOPMENT CORPORATION (INTERNATIONAL SERVICES) LTD.**
**4 Chopin Street**
**Jerusalem(IL)**

(72) Inventor: **Miller, Moshe**
**Sanhedria Murhevet 124/5**
**Jerusalem(IL)**

(74) Representative: **Brown, John David et al,**
**FORRESTER & BOEHMERT Widenmayerstrasse 4/I**
**D-8000 München 22(DE)**

(54) A vehicle drive system.

(57) A vehicle drive system suitable for use with or without a kinetic energy storage capability and including a source of rotational energy, continuously variable transmission apparatus defining an input terminal coupled to the source of rotational energy and an output terminal, differential gear apparatus, having a first drive terminal, clutch coupled to the rotational energy source, a second drive terminal coupled to the output terminal of the continuously variable transmission apparatus and a third drive terminal coupled to the drive wheels of a vehicle, the rotational energy source being selectable from a group including a heat engine and a flywheel.

FIGURE 1

EP 0 127 986 A2

A Vehicle Drive System

## FIELD OF THE INVENTION

The present invention relates to vehicle drive systems and more particularly to systems employing continuously variable transmissions which are suitable for association with kinetic energy storage apparatus.

## BACKGROUND OF THE INVENTION

Various types of vehicle drive systems incorporating continuously variable transmissions are known in the patent literature and are presently in use. Among these are systems which employ various types of gearing for extending the effective operating range of the continuously variable transmission. One such system is described in U.S. Patent 4,126,200 and includes a source of rotational energy such as a heat engine, and kinetic energy storage apparatus such as a flywheel. The flywheel and source of rotational energy are connected to the continuously variable transmission and to the drive shaft of the vehicle in a number of selectable modes which provide different effective gear ratios employed in the operation of the vehicle.

The system of U.S. Patent 4,126,200 also provides the possibility of operating the heat engine at low speed when the vehicle is at low speed and for directly connecting the engine to the drive shaft of the vehicle at moderate to high vehicle speeds such that the engine speed increases together with the increase in vehicle speed.

1

The system of U.S. Patent 4,126,200 employs four clutches to establish the required interconnections between the heat engine, the flywheel, the drive terminals of the continuously variable transmission and the drive shaft of the vehicle. Since relatively large amounts of torque are transmitted thereby, these clutches are substantial in size and cost.

There is described in UK Published Patent Application 2,095,188 a driveline for regenerative braking which provides for driving of a transmission either by a flywheel or by the engine and automatic switching therebetween. A similar system is described in U.K. Patent 1,512,949.

An article entitled "CVT TAKES THE BUS ROUTE" which appeared in The Engineer, a British Publication, of 14 April, 1983 describes the use of a Perbury type continuously variable transmission for bus applications. A regenerative braking system is proposed for use with this system.

Variable metal V belt transmissions are known and described inter alia in a catalog entitled "Transmatic" of Van Doorne Transmission B.V. of the Netherlands. In the described Transmatic unit, the engine is coupled to the transmission by a lock-up fluid coupling. The output of the fluid coupling drives a planetary gear set with a brake and a clutch for permitting selection of forward and reverse modes. The output of the planetary gear set drives a first variable pulley which, in turn, drives a second variable pulley via a metal V belt. The output of the second variable pulley drives the transmission output shaft via a fixed ratio chain drive.

The Transmatic unit requires a fluid coupling because the metal V belt system does not provide zero output speed and requires clutches and gears in order to implement a reverse mode. The Transmatic unit suffers from a number of disadvantages. Firstly, it is limited as to the range of ratios available and thus the engine is not permitted to operate under the most efficient conditions. Secondly, the belt tends to be highly loaded when the vehicle accelerates from rest. Thirdly, the Transmatic unit is not suitable for use with a flywheel because the overall range of ratios is limited and because the engine speed and flywheel speeds cannot be decoupled in a manner similar to that shown in U.S. Patent 4,126,200.

The required feature of decouplability of the engine and flywheel speeds is also absent in the systems described above and shown in U.K Published Patent Application 2,095,188A, U.K. Patent 1,512,949 and in the "Engineer" article.

## SUMMARY OF THE INVENTION

The present invention seeks to provide a vehicle drive system employing a continuously variable transmission which has significant advantages both for applications in which a kinetic energy storage feature is provided and for applications in which such a feature is absent.

There is thus provided in accordance with a preferred embodiment of the present invention, a vehicle drive system suitable for use with or without a kinetic energy storage capability and including a source of rotational energy, clutch apparatus, continuously variable transmission apparatus defining an input terminal coupled to the source of rotational energy and an output terminal, differential gear apparatus, having a first drive terminal, selectably coupled by the clutch apparatus to the rotational energy source, a second drive terminal coupled to the output terminal of the continuously variable transmission apparatus and a third drive terminal coupled to the drive wheels of a vehicle, the rotational energy source being selectable from a group including a heat engine and a flywheel.

Further in accordance with a preferred embodiment of the present invention, there is provided a vehicle drive system suitable for use with or without a flywheel and including a source of rotational energy, clutch apparatus, continuously variable transmission apparatus defining an input terminal coupled to the source of rotational energy and an output terminal; differential gear apparatus, having a first drive terminal, selectably coupled by the clutch apparatus to the rotational energy source, a second drive terminal coupled to the output terminal of the continuously variable transmission apparatus, a third drive terminal coupled to the drive wheels of the vehicle, the vehicle drive system being capable of connection in two alternative connection arrangements, wherein in the first arrangement the rotational energy source is selected to be a heat engine and in the second arrangement the rotational energy source is selected to be a flywheel and an engine is connected to the first drive terminal of the differential.

5

Still further in accordance with a preferred embodiment of the present invention, there is provided a vehicle drive system suitable for use with or without a flywheel and including a source of rotational energy, clutch apparatus, continuously variable transmission apparatus defining an input terminal coupled to the source of rotational energy and an output terminal; differential gear apparatus, having a first drive terminal, selectably coupled by the clutch apparatus to the rotational energy source, second drive terminal coupled to the output terminal of the continuously variable transmission apparatus and a third drive terminal coupled to the drive wheels of the vehicle, the first drive terminal of the differential being arranged to be capable of being coupled to a heat engine.

Additionally in accordance with an embodiment of the present invention the vehicle drive system also includes selectable coupling apparatus including first apparatus for coupling in a first mode of operation the source of rotational energy to the input terminal of the continuously variable transmission and to the first drive terminal, the output terminal of the continuously variable transmission to the second drive terminal of the differential gear apparatus and the third drive terminal to the drive wheels of a vehicle and second apparatus for coupling in a second mode of operation the source of rotational energy to the input terminal of the continuously variable transmission, the output terminal of the continuously variable transmission to the second drive terminal, the third drive terminal to the vehicle wheels and any two of the first, second and third drive terminals together in locked arrangement, whereby the differential gear apparatus rotates together as a single unit.

Further in accordance with a preferred embodiment of the present invention there is provided a vehicle drive system including kinetic energy storage apparatus, clutch apparatus, continuously variable transmission apparatus defining an input terminal coupled to the kinetic energy storage apparatus and an output terminal, differential gear apparatus, having a first drive terminal, selectably coupled by the clutch apparatus to the kinetic energy storage apparatus, a second drive terminal coupled to the output terminal of the continuously variable transmission and a third drive terminal connected to the drive wheels of a vehicle, and an engine coupled to the first drive terminal of the differential gear apparatus.

Additionally in accordance with an embodiment of the present invention the vehicle drive system also includes selectable coupling apparatus including first apparatus for coupling in a first mode of operation the kinetic energy storage apparatus and the engine to the input terminal of the continuously variable transmission and to the first drive terminal, the output terminal of the continuously variable transmission to the second drive terminal of the differential gear apparatus and the third drive terminal to the drive wheels of a vehicle and second apparatus for coupling in a second mode of operation the kinetic energy storage apparatus to the input terminal of the continuously variable transmission, the engine to the first drive terminal, the output terminal of the continuously

6

variable transmission to the second drive terminal, the third drive terminal to the vehicle wheels and any two of the first, second and third drive terminals together in locked arrangement, whereby the differential gear apparatus rotates together as a single unit.

Further in accordance with another preferred embodiment of the invention there is provided a vehicle drive system comprising a source of rotational energy, first and second clutches, continuously variable transmission apparatus defining an input terminal coupled to the source of rotational energy and an output terminal, and differential gear apparatus including a first drive terminal selectably coupled via the first clutch to the input terminal, a second drive terminal coupled to the output terminal of the continuously variable transmission apparatus and a third drive terminal coupled to the drive wheels of the vehicle, and wherein the second clutch means is operative to selectably connect any two of the first, second and third drive terminals of the differential gear apparatus whereby, when the second clutch is engaged, the differential gear apparatus is locked together and rotates as a single unit.

Further in accordance with this embodiment of the invention, the vehicle drive system also comprises selectable coupling apparatus including:

first apparatus for coupling in a first mode of operation the source of rotational energy to the input terminal of the continuously variable transmission apparatus and to the first drive terminal of the differential gear means, the output terminal of the continuously variable transmission apparatus to the second drive terminal of the differential gear apparatus and the third drive terminal of the differential gear apparatus to the drive wheels of a vehicle; and

second apparatus for coupling in a second mode of operation, the source of rotational energy to the input terminal of the continuously variable transmission apparatus, the output terminal of the continuously variable transmission apparatus to the second drive terminal of the differential gear apparatus, the third drive terminal of the differential gear apparatus to the vehicle wheels and any two of the first, second and third drive terminals of the differential gear apparatus together via the second clutch in locked arrangement, whereby the differential gear apparatus rotates together as a single unit.

Additionally in accordance with a preferred embodiment of the present invention, the first drive terminal of the differential gear apparatus is a carrier, the second drive terminal is a sun gear, the third drive terminal is a ring gear and the ratio Z of the ring gear to the sun gear is sufficiently high to produce a substantial reduction of torque on the output terminal of the continuously variable transmission.

Additionally in accordance with this embodiment of the present invention, the vehicle drive system is operative such that transitions between the first and second modes of operation occur substantially synchronously.

Further in accordance with this embodiment of the present invention, the vehicle drive system also comprises fixed gear reduction apparatus defining a gear reduction ratio G between the ring gear and the drive wheels of the vehicle, the fixed gear reduction apparatus being sufficiently low in order to allow the engine to operate at a relatively low speed when the vehicle is at a relatively high speed.

Additionally in accordance with this embodiment of the invention, the vehicle drive system also comprises fixed ratio drive apparatus connecting the input terminal via the first clutch to the carrier and defining a speed ratio C of the carrier to the input terminal.

Still further in accordance with an embodiment of the invention the vehicle drive system is operative wherein C is chosen such that synchronized transitions between the first and second modes of operation occur at a speed ratio BR between the output terminal and the input terminal of the continuously variable transmission other than close to the extreme low value of the range of available ratios BR of the continuously variable transmission.

9

## BRIEF DESCRIPTION OF THE DRAWINGS

The invention will be more fully understood and appreciated from the following detailed description taken in conjunction with the drawings in which:

FIG. 1 is a schematic diagram of a preferred embodiment of the invention;

FIG. 2 shows the principle connections and power flow of the variable speed transmission system of FIG. 1 in a first mode of operation;

FIG. 3 shows the principal connections and power flow of the variable speed transmission system of FIG. 1 in a second mode of operation;

FIG. 4 is a plot of engine speed and flywheel speed as a function of vehicle velocity;

FIG. 5 is a schematic diagram of an alternative embodiment of the invention showing alternative clutch connection details;

FIG. 6 is a schematic diagram of a further alternative embodiment of the invention showing further alternative clutch connection details;

FIG. 7 is a schematic diagram of a further alternative embodiment of the invention showing alternative connection details of the differential;

FIG. 8 shows the principal connections and power flow of the variable speed transmission system of FIG. 1 in a low mode of operation;

FIG. 9 is a schematic diagram of an alternate embodiment of the invention including means to start the flywheel from rest;

FIG. 10 is a schematic diagram of an alternate embodiment of the invention including alternate means to start the flywheel from rest;

FIG. 11 is a schematic diagram of an alternate embodiment of the invention in which a variable V belt drive is used;

FIG. 12 is a schematic diagram of a further alternative embodiment of the invention in which a variable V belt drive is used in an arrangement suitable for a rear wheel drive vehicle;

FIG. 13 is a schematic diagram of a further embodiment of the invention in which a flywheel is not employed;

FIG. 14 shows the principal connections and power flow of the variable speed transmission system of FIG. 13 in a first mode of operation;

FIG. 15 shows the principal connections and power flow of the variable speed transmission system of FIG. 13 in a second mode of operation;

FIG. 16 is a schematic diagram of a further embodiment of the invention in which a flywheel is not employed; and

FIG. 17 is a schematic diagram of another embodiment of the invention in which a flywheel is not employed.

/2

## DETAILED DESCRIPTION OF THE INVENTION

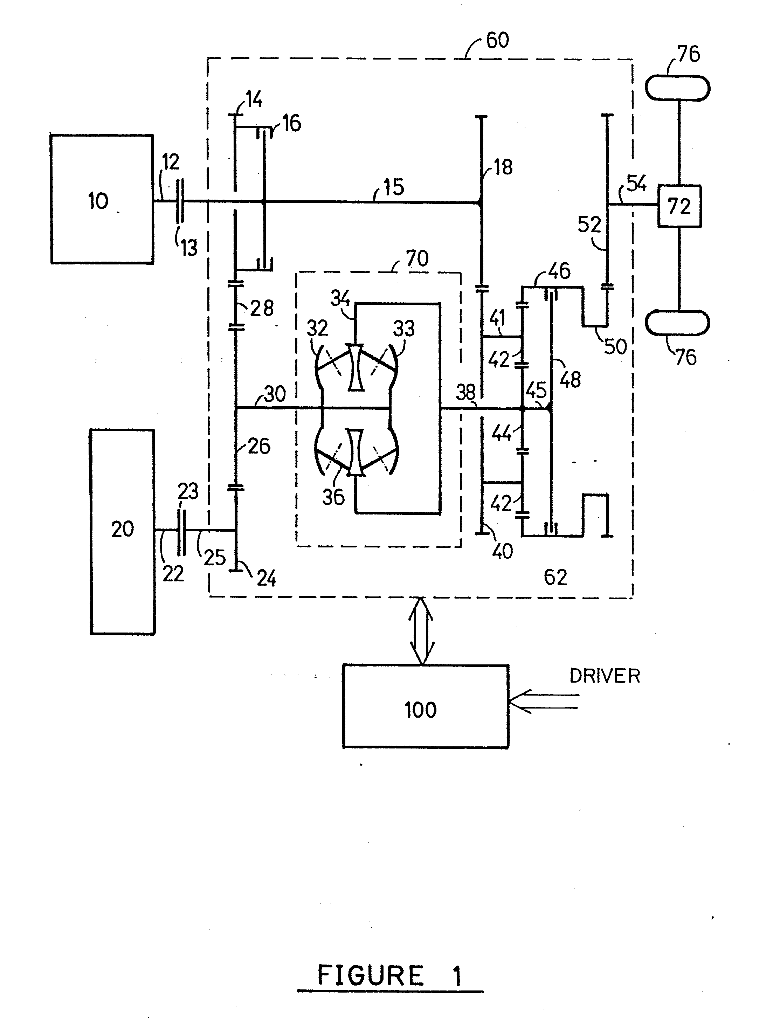

Referring now to FIG. 1, there is shown in schematic diagram form a preferred embodiment of the vehicle drive system of the present invention.

A heat engine 10 has an output crank shaft 12 which is coupled to the engine input shaft 15 of a vehicle transmission, generally designated by reference number 60 via an engine clutch 13. The heat engine 10 may be a conventional spark ignition or combustion ignition engine or any other suitable source of rotational energy.

Gear 14 rotates freely about engine input shaft 15 and may be selectively connected to the engine input shaft 15 by activation of a clutch 16. Clutch 16 may be a clutch of the conventional hydraulically or electrically activated type or any other suitable clutch means.

Gear 14 is in constant mesh with idler gear 28 which is in turn in constant mesh with a gear 26 which is drivingly connected to a traction drive input member 30 of a continuously variable traction drive 70. Gear 28 is used to change the sense of rotation of gear 26. The continuously variable traction drive 70 may be a conventional Perbury traction transmission such as that described in the aforementioned "The Engineer" article, or any other continuously variable transmission unit such as a hydrostatic transmission, variable V belt transmission, Van Doorne type transmission or a power splitting hydrostatic transmission such as that manufactured by the Allgaier company of

12

Uhingen, West Germany. Hence, if clutch 16 is activated, a driving connection is established between the engine 10 and the traction drive input member 30.

In the illustrated embodiment, the traction drive input member 30 is drivingly connected to traction surfaces 32 and 33. Motion is transmitted to the traction drive output member 34 via rollers 36. By varying the angle of the rollers, a continuously variable speed ratio between the traction drive input member 30 and traction drive output member 34 may be achieved.

The traction drive output terminal 34 is drivingly connected to a shaft 38 which is in turn connected to the second drive terminal 44 of a differential gear, such as the sun gear of a planetary gear set generally designated 62.

A flywheel 20, which may be of conventional construction, is drivingly connected to a flywheel output shaft 22 which in turn may be selectively coupled to a flywheel input shaft 25 of the transmission 60 via a flywheel clutch 23. Flywheel clutch 23 may be a clutch of conventional hydraulic, electrical, lock up fluid coupling, lock up torque converter type or any other suitable clutch means.

The flywheel input shaft 25 is drivingly connected to a gear 24 which is in constant mesh with gear 26. Hence, if flywheel clutch 23 is activated, a driving connection is established between the flywheel 20 and the traction drive input terminal 30.

The engine input shaft 15 is also fixedly connected to a gear 18 which is in constant mesh with a gear 40. Gear 40 rotates freely about shaft 38 and is drivingly connected to the first drive terminal of the differential, here carrier 41 of planetary gear set 62. The carrier 41 contains a multiplicity of planet gears 42. A driving connection is therefore established between the engine input shaft 15 and carrier 41 of the planetary gear set 62.

The third drive terminal of the differential, in this embodiment a ring gear 46 of planetary gear set 62, is drivingly connected to a gear 50. The ring gear 46 may be selectably connected to the sun gear 44 of the planetary gear set 62 via a clutch 48 via shaft 45. Clutch 48 may be of the conventional hydraulic or electric type or any other suitable clutch means. When clutch 48 is activated, the entire planetary gear set 62 rotates as a block and the speeds of the sun gear 44, the ring gear 46 and the carrier 41 are all identical. The planetary gear 62 rotates as a single block and differential action is no longer present. The carrier 41, the sun gear 44 and the ring gear 46 act as a single unit mechanically locked together.

The gear 50 is in constant mesh with a gear 52 which in turn is connected to a transmission output shaft 54. The transmission output shaft 54 is drivingly connected to a conventional differential 72 and thence to the drive wheels 76 of the vehicle. It is noted that ring gear 46 is drivingly connected to the output shaft 54 via gears 50 and 52. This is a direct and permanent connection, no clutch being interposed between the third drive terminal and the transmission output shaft 54.

A control system 100 directs the operation of the vehicle drive system. It is operative to receive signals from the operator of the vehicle as well as signals corresponding to the speed of heat engine 10, flywheel 20 and the vehicle itself and to activate one or more of clutches 16, 23, 13 and 48 in response thereto to provide the desired mode of operation of the drive system. An example of a suitable control system is described in detail in United States patent 4,126,200. The logical functions of the control system would of course be implemented using a suitably programmed conventional microcomputer with appropriate modifications in accordance with known commercially available techniques.

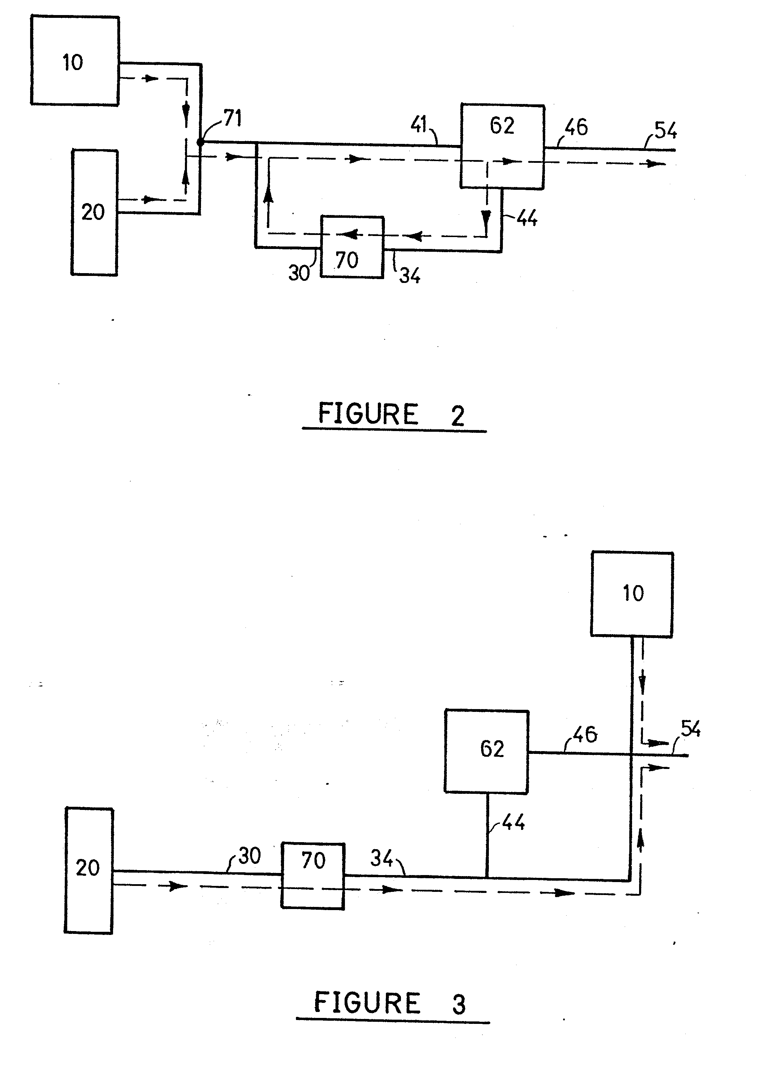

Referring now to FIG. 2, there is shown the power flow between the engine 10, flywheel 20 and transmission output shaft 54 when the transmission 60 is arranged for operation in a first mode of operation.

With further reference to FIG. 1 and FIG. 2, it can be seen that to establish the first mode of operation, clutch 16 is engaged, thereby establishing a driving connection between the heat engine 10 and flywheel 20 via gears 14, 28, 26 and 24. This direct mechanical connection between the heat engine 10 and flywheel 20 is indicated at point 71 in Fig. 2.

The flow of power between the engine 10 and flywheel 20 to transmission output shaft 54 is illustrated in FIG. 2 by a dashed line with arrowheads indicating the direction of power flow when the vehicle is accelerating.

The combined power from heat engine 10 and flywheel 20 at point 71 is divided into a direct path to the carrier 41 and a path through the continuously variable transmission 70 to the sun gear 44 of planetary gear set 62. The power from these two paths is summed at the ring gear 46 of planetary gear set 62. The combined power flow is then transmitted from the ring gear 46 to output shaft 54.

The combination of the continuously variable traction drive 70 and the planetary gear set 62 acts as a continuously variable transmission, generally designated 60, interposed between the heat engine 10 and flywheel 20 on the one hand, and the vehicle on the other hand.

Referring now to FIGS. 1 and 3, there is shown the principal connections between the heat engine 10, flywheel 20 and transmission output shaft 54 when the transmission 60 is arranged for operation in a second mode. To establish the second mode of operation, clutch 16 is released and clutch 48 is engaged.

When the second mode of operation is established, the flywheel 20 remains connected to the input member 30 of the continuously variable transmission 70. The output member 34 of the continuously variable transmission 70 remains connected to the sun gear 44 of the planetary gear set 62. With the ring gear 46 and sun gear 44 connected together by clutch 48, the entire planetary gear set 62 rotates as a block and creates a one to one gear ratio between the output member 34 of the continuously variable transmission 70 and the gear 50.

In the second mode, therefore, the heat engine 10 is directly connected to the output shaft 54 via shaft 15, gear 18, gear 40, locked up planetary gear set 62, gear 50 and gear 52 and the continuously variable transmission 70 is completely bypassed.

Because of this direct connection between the heat engine 10 and transmission output shaft 54, the engine increases in speed directly as the vehicle increases in speed and all power produced by the engine completely bypasses the continuously variable transmission 70, resulting in higher efficiency of engine power transmission as well as longer life of the transmission 70.

The continuously variable traction drive 70 is seen to be interposed between the flywheel 20 and the output shaft 54 via shaft 25, gear 24, gear 26, input member 30, output member 34, shaft 38, locked up planetary gear set 62, gear 50 and gear 52, while the heat engine 10 is directly connected to the output shaft 54 of the transmission 60.

It is a particular advantage of the present invention that the first mode of operation is operative at low vehicle speeds wherein the speed of the source of rotational energy is low and the second mode of operation is operative at moderate to high vehicle speeds and wherein the speed of the heat engine 10 is directly proportional to the speed of the vehicle and all power produced by heat engine 10 is transmitted directly to the vehicle without passing through the continuously variable transmission.

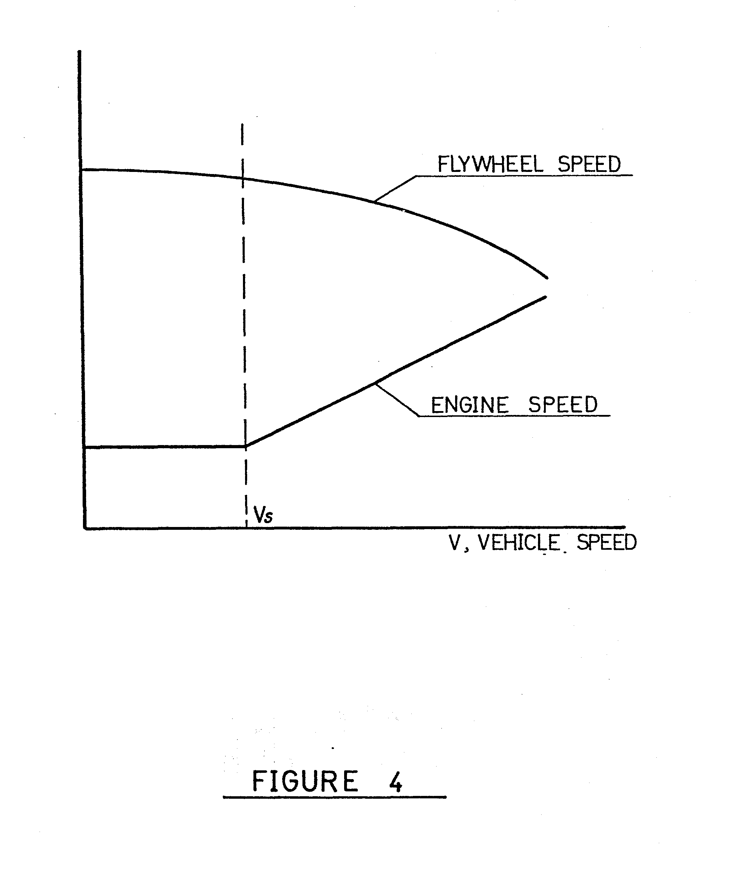

Referring now to FIG. 4 there is shown a plot of the speed of the heat engine 10 and the flywheel 20 as a function of vehicle speed V. At low vehicle speeds ($V < V_s$) when the engine 10 is directly coupled to the flywheel 20, the engine speed decreases together with the decrease in speed of the flywheel.

It is appreciated that for operation at vehicle speeds V < Vs, the ratio of gears 14, 26 and 24 are so chosen that when the flywheel 20 is at a high speed in the first mode, the speed of the heat engine 10 is low. This allows the heat engine 10 to start at low speed when the vehicle starts from rest.

This type of operation of the heat engine 10 results in significant advantages in terms of fuel economy, noise and operating life of the heat engine 10. The advantages of operating the heat engine 10 in this manner are described in more detail in United States patent 4,126,200.

The flywheel 20 and heat engine 10 continue to decrease in speed as the vehicle increases in speed. When the velocity Vs is reached, the system switches to operation in the second mode. The flywheel 20 continues to decrease in speed, providing energy to accelerate the vehicle while the speed of the engine increases directly as the vehicle speed increases.

This type of operation of the heat engine 10 results in significant increase in the overall efficiency of the transmission as well as making the full power of the heat engine 10 available at high vehicle speeds.

The flywheel decelerates while the vehicle accelerates thereby providing power to accelerate the vehicle. The engine however, which is now directly connected to the wheels of the vehicle, accelerates as the vehicle accelerates. The speed of ring gear 46 and sun gear 44 are equal and torque is transmitted through clutch 48.

It will be appreciated by those skilled in the art that the

18

ratios of gears 14, 26, 18 and 40, the ratios of the elements of the planetary gear 62, and the speed ratio of the variable transmission 70 may be selected so that the speed of the ring gear 46 can be zero at a given ratio of the traction drive 70 and that both reverse and forward speeds of the ring gear 46 may be achieved. It will also be appreciated by those skilled in the art that the transition between the first mode and the second mode may be achieved when there is synchronization between the ring gear 46 and the sun gear 44.

The speed relationship between the various components may be more clearly understood with reference to Table 1. Table 1 represents the following specific example:

| | |
|---|---|
| Vehicle mass | 16000 kg. |
| Flywheel inertia | 11.62 kg-m**2 |
| n54/V | 38 rpm/km/hr |
| Z | 2 |
| Z14/Z26 | 1.5 |
| Z18/Z40=Z52/Z50 | 0.5 |
| Z24/Z26 | 0.26 |
| Vs | 33.3 km/hr |

where Z is the ratio of the number of teeth in the ring gear 46 to the number of teeth in the sun gear 44.

In this illustrative example, the power output of the heat engine is controlled so that the total kinetic energy of the vehicle plus flywheel remains substantially constant as described in U.S. Patent 4,126,200.

A negative value for a speed in Table 1 indicates that the velocity is opposite in direction to the engine speed. Numbers above the dashed line correspond to operation in the first mode while numbers below the dashed line represent operation in the second mode. V represents the vehicle velocity in kilometers per hour and all other data represents rotational speed in revolutions per minute. For example, nfw represents the flywheel speed in revolutions per minute and n14 represents the speed of gear 14 in revolutions per minute. RAGR represents the speed ratio of the continously variable transmission 70 and is defined by $-n38/n30$.

In the first mode of operation, the engine speed ne is proportional to the flywheel speed nfw. In the second mode of operation, the engine speed ne is proportional to the vehicle speed.

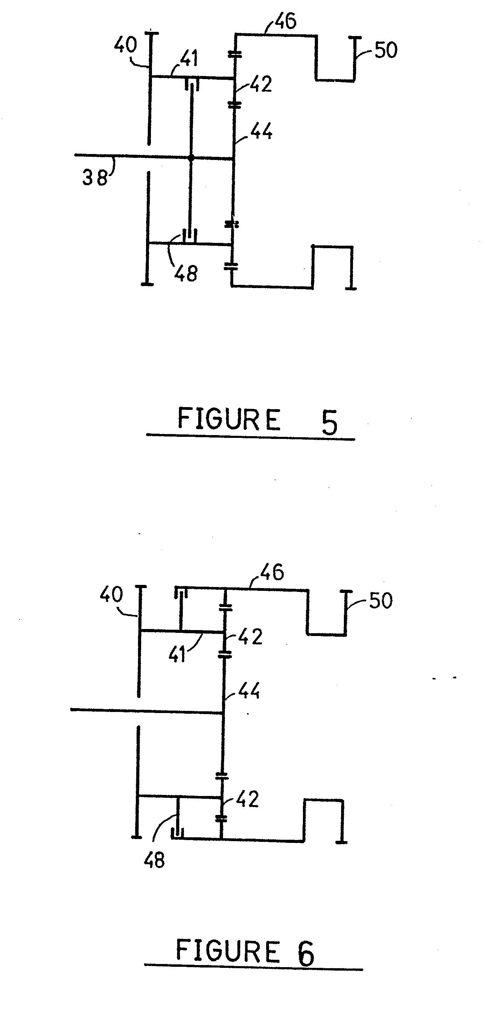

Another embodiment of the drive system of the present invention is illustrated in FIG. 5, wherein those parts and units having counterparts in the embodiment of FIG. 1 are designated by like reference numerals. Referring to FIG. 5, the clutch 48 may be disposed between the carrier 41 and the sun gear 44. The operation of the drive system is substantially the same as described in FIG. 1.

Yet another embodiment of the drive system of the present invention is illustrated in FIG. 6, wherein those parts and units having counterparts in the embodiment of FIG. 1 are designated by like reference numerals. Referring to FIG. 6, the clutch 48 may be disposed between the carrier 41 and the ring gear 46. The operation of the drive system will be substantially the same as that described in FIG 1.

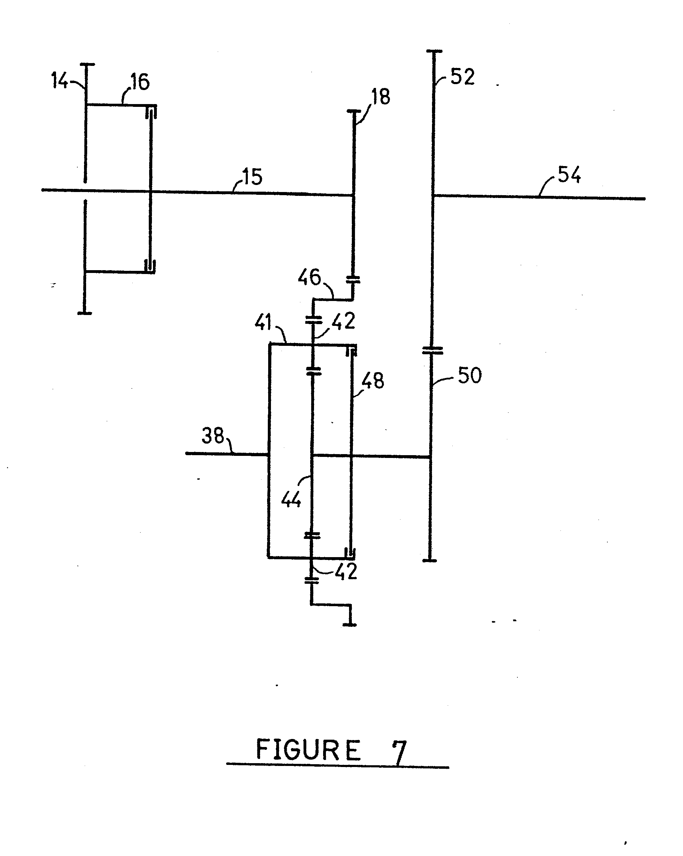

Reference is now made to FIG. 7 wherein those parts and units having counterparts in the embodiment of FIG. 1 are designated by like reference numerals. In the embodiment of FIG. 7, shaft 38 is drivingly connected to the carrier 41, gear 18 is drivingly connected to ring gear 46 and sun gear 44 is drivingly connected to gear 50. Clutch 48 is interposed between the sun gear 44 and the carrier 41 or it may be interposed between the other elements of the differential as described in FIG. 5 and FIG. 6.

The first, second and third drive terminals of the differential are substantially interchangeable and that equivalent operation of the drive system may be obtained by interchanging the connections to the elements of the differential.

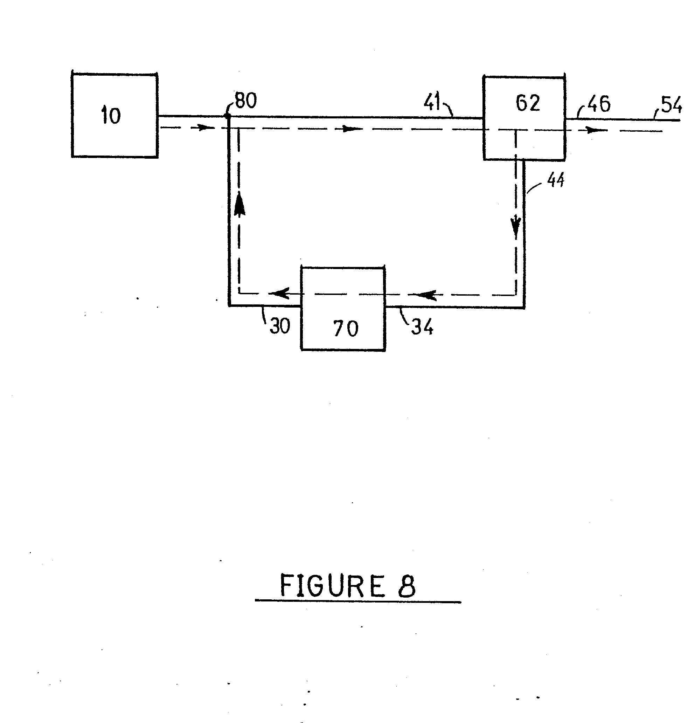

Reference is now made to FIG. 8 which shows the principal connections and power flow when the variable transmission of FIG. 1 is arranged for a low mode of operation. During the course of operation of the vehicle, the total kinetic energy of the system may degrade as a result for example of climbing a long hill. When this occurs, it is desirable to disconnect the flywheel 20 from the variable transmission 60 to allow the heat engine 10 to operate at a high speed thereby providing all the power it is capable of delivering.

This mode of operation is achieved by releasing the flywheel clutch 23 and changing RAGR, the speed ratio of the continuously variable transmission 70 as described above, in the proper sense to allow the engine 10 to operate at high speed. The variable transmission system therefore operates in a manner similar to the low mode described in the aforementioned U.S. patent 4,126,200.

With flywheel clutch 23 released, the heat engine 10 is drivingly connected to sun gear 44 and ring gear 46 is connected to the transmission output shaft 54. Engine power therefore flows from the engine to point 80 and is thereafter split between the variable transmission 70 and the planetary gear set 62 before being transmitted to the transmission output shaft 54.

Transmissions between the low mode of operation and the first or second modes of operation are controlled in a manner similar to that described in the aforementioned U.S. patent 4,126,200.

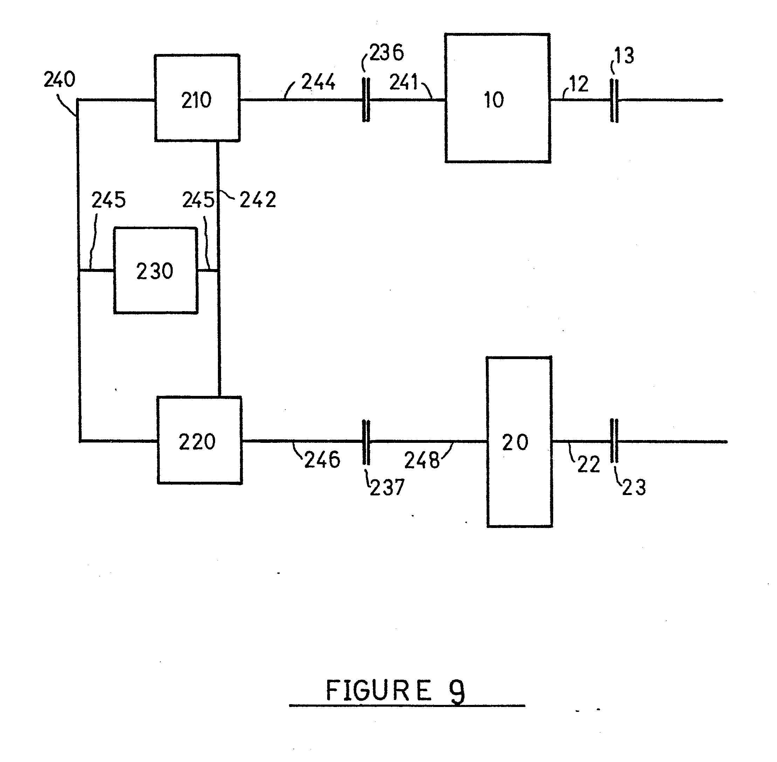

Yet another embodiment of the drive system of the present invention is illustrated in FIG 9, wherein those parts and units having counterparts in the embodiment of FIG 1 are designated by like reference numerals.

In the embodiment illustrated in FIG 9, a hydraulic pump 210 is driven by the engine 10 via a shaft 241, an electromagnetic clutch 236 and a shaft 244 so that if the clutch 236 is engaged, the pump 210 is driven by the engine 10. A hydraulic motor 220 is drivingly connected to flywheel 20 via a shaft 246, an electromagnetic clutch 237 and shaft 248 so that if clutch 237 is engaged, the hydraulic motor 220 can drive the flywheel 20.

Pump 210 is connected via hydraulic conduit 240 to hydraulic motor 220 so that oil pumped by pump 210 is delivered to motor 220, after which the oil is returned to pump 210 via hydraulic conduit 242. A relief valve 230 is connected across conduits 240 and 242 via hydraulic conduits 245. Conduit 242 may include a small oil reservoir (not shown).

To start the flywheel 20 from rest, engine clutch 13 and flywheel clutch 23 are disengaged and the engine 10 is started by conventional means. Electromagnetic clutches 236 and 237 are engaged and the engine 10 drives pump 210. The pressure produced by pump 210 produces a torque on motor 220 which causes the flywheel 20 to begin rotating. Because of the high inertia of the flywheel 20, it accelerates slowly from rest so that excess oil produced by pump 210 is transferred back to the return conduit 242 via relief valve 230. When the flywheel 20 is at a low speed, most of the oil produced from pump 210 flows through relief valve 230. As the flywheel 20 rotates faster and faster, less oil flows through the relief valve 230.

This process is continued until the flywheel 20 has reached a speed which is sufficiently high so that the vehicle can commence normal operation. At this point, electromagnetic clutches 236 and 237 are disengaged so that pump 210 and motor 220 do not rotate while the vehicle is in normal operation, thereby reducing the parasitic loss of the flywheel charging system.

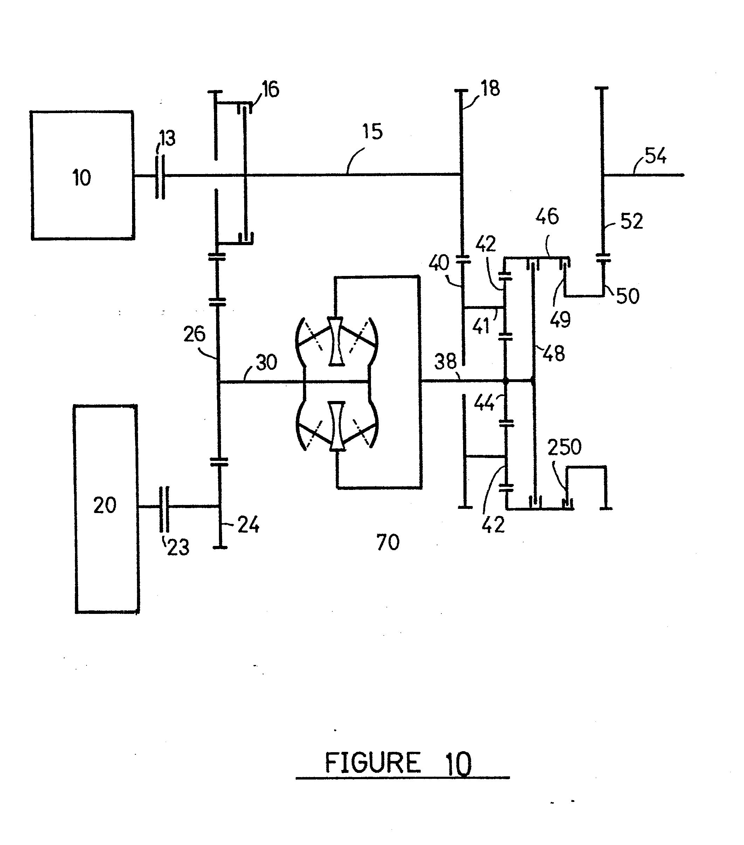

Another embodiment of the drive system of the present invention is illustrated in FIG 10, wherein those parts and units having counterparts in the embodiment of FIG 1 are designated by like reference numerals.

In the embodiment illustrated in FIG 10, a hydraulically activated clutch 49 is interposed between ring gear ,

46 and gear 50 so that if clutch 49 is disengaged, the ring gear 46 is disengaged from gear 50.

The engine 10 is started in the conventional manner with all clutches disengaged. Clutch 48 is then engaged so that ring gear 46 is drivingly connected to sun gear 44. The ring gear 46 rotates but the vehicle does not move because clutch 49 is disengaged.

If engine clutch 13 is engaged, shaft 38 is driven via shaft 15, gear 18, gear 40, carrier 41, planet gears 42, ring gear 46, clutch 48 and sun gear 44. The ratio RAGR of the traction drive 70 is arranged at its highest ratio so that input member 30 rotates as slowly as possible. The flywheel clutch 23 is then slowly engaged by letting the clutch 23 slip. In the numerical example considered hereinabove, if the speed of the heat engine 10 is 1000 rpm, and the ratio RAGR=1.5, the speed of the input member 30 is 333 rpm so that the speed of the gear 24 is 1282 rpm. The flywheel clutch 23 therefore must slip only until the flywheel has reached the speed of 1282 rpm. It will be readily apparent that the heat dissipation capacity of flywheel clutch 23 may be considerably reduced by starting the flywheel in this manner.

After the flywheel has reached operating speed, the clutch 49 is engaged so that the vehicle may operate in the normal manner.

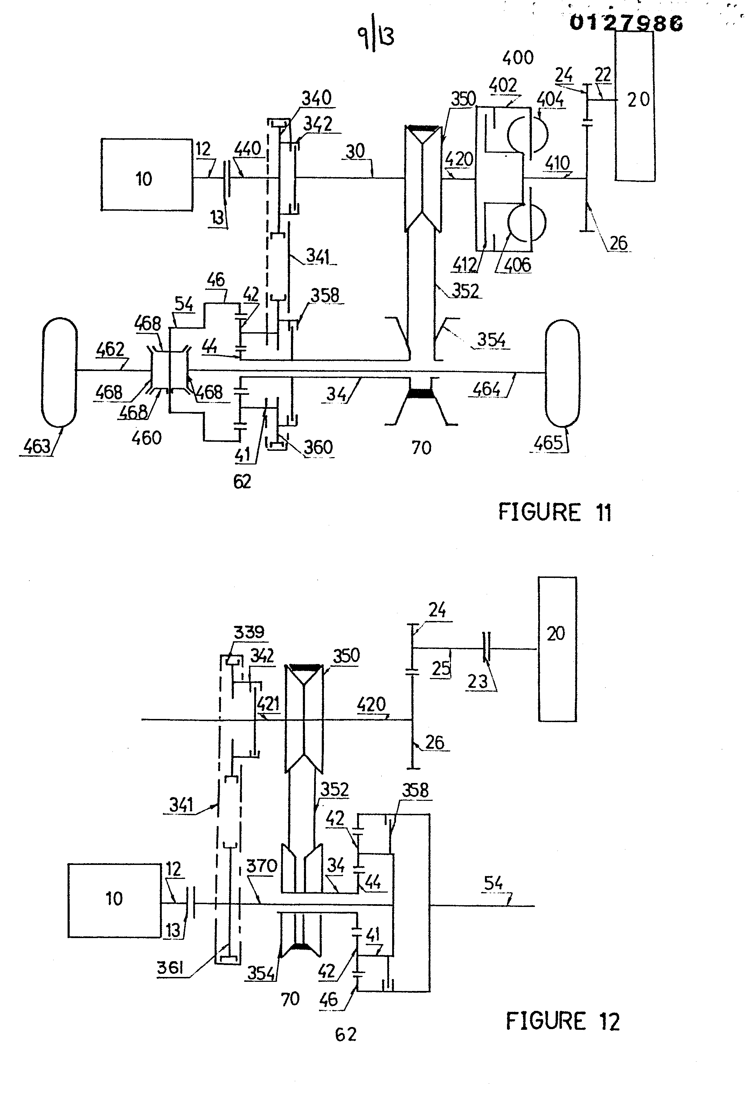

Yet another embodiment of the drive system of the present invention is illustrated in FIG 11, wherein those parts and units having counterparts in the embodiment of FIG 1 are designated by like reference numerals.

In the embodiment of FIG 11, the continuously variable transmission 70 is a variable V belt drive of conventional type of the pulling or pushing type such as variable belt forming a part of the Van Doorne Transmatic TR 180 N, illustrated in the catalog of January 1980 of Van Doorne's Transmissie B.V. of the Netherlands. The variable V belt drive has a first pulley 350 fixedly attached to input member 30 and a second pulley 354 fixedly attached to output member 34 so that a varying speed ratio may be obtained between members 30 and 34.

The connection of the first pulley 350 to input member 30 and of second pulley 354 to output member 34, and the control thereof is achieved in a conventional manner as illustrated in U.S. 4,152,947 assigned to Van Doorne's Transmissie B.V..

The crank shaft 12 of heat engine 10 is coupled to the engine input shaft 440 via engine clutch 13. A pulley 340 is fixedly connected to the engine input shaft 440. Pulley 340 is in constant mesh with a pulley 360 via chain drive 341. If the engine clutch 13 is activated a driving connection is established between the heat engine 10 and the pulley 360.

A clutch 342 rotates together with pulley 340. If the clutch 342 is activated, a driving connection is established between the pulley 340 and the input member 30. Clutch 342 may be of the conventional hydraulic or electrically activated type.

The input member 30, which is fixedly connected to first pulley 350, is in turn fixedly connected to the input member 402 of a conventional lock up fluid coupling 400 via shaft 420. The input member 402 has mounted thereon an impeller 404 which transmits power to turbine element 406 by the -centrifugal action of hydraulic fluid. The turbine 406 is fixedly connected to the output member 410 of lock up fluid coupling 400. The input member 402 also has mounted thereon a lock up clutch 412 so that power may be transmitted directly from the input member 402 to the output member 410 of lock up fluid coupling 400 when clutch 412 is engaged. When the fluid coupling 400 is locked up, the power transfer is highly efficient because it is not subject to the hydraulic losses normally associated with a fluid coupling.

The output element 410 is fixedly connected to gear 26 which is in constant mesh with flywheel gear 24. Flywheel gear 24 is fixedly connected to shaft 22 which is in turn fixedly connected to the flywheel 20.

First pulley 350 is connected to the second pulley 354 via belt 352 and the second pulley 354 is fixedly connected to output member 34.

The output member 34 is in turn fixedly connected to sun gear 44 of planetary gear set 62. The pulley 360 is fixedly connected to the carrier 41 and the carrier 41 has mounted thereon a multiplicity of planet gears 42. The ring gear 46 of planetary gear set 62 drives the output differential generally designated 460 which in turn drives the front wheel drive shafts 462 and 464 via bevel gears 468 in the conventional manner. Drive shafts 462 and 464 are fixedly connected to the drive wheels of the vehicle 463 and 465.

A clutch 358 is interposed between pulley 360 and output member 34 so that when clutch 358 is activated, the carrier 41 and sun gear 44 of planetary gear set 62 are locked together and rotate as a single unit.

The embodiment of FIG 11 is therefore particularly suited to a front wheel drive vehicle wherein the entire drive line would be mounted in the conventional transaxle mounting.

Referring also to FIG 2 it is seen that when clutch 342 is engaged the heat engine 10 and flywheel 20 are connected together and are coupled in turn to the input member 30 and to the carrier 41. The output member 34 is connected to the sun gear 44 and the ring gear 46 is connected to the output shaft 54 such that the system is operating in the first mode.

Referring now to FIG 3, when clutch 358 is engaged the heat engine 10 is directly connected to the output shaft 54 and the heat engine 10 rotates at a speed proportional to the vehicle speed. The power produced by the engine therefore need not pass through the variable V belt drive 70 but is transmitted at high efficiency directly to the wheels of the vehicle. The flywheel 20 is connected to the input member 30 and the output member 34 is connected to the sun gear 44 of the locked up planetary so that the system is operating in the second mode.

It will be apparent that all of the advantages and features obtainable in the embodiment of FIG 1, which employs a variable traction drive as the continuously variable element, are also obtainable in the embodiment of FIG 11 which employs a variable V belt drive as the continuously variable element. It will also be apparent that clutch 358 may be interposed between any of the elements of the planetary gear set 62.

27

The lock up fluid coupling 400 is used to start the flywheel from rest. To charge the flywheel, the engine clutch 13 and clutch 342 are engaged and lock up clutch 412 is disengaged. The engine is controlled by conventional means to operate at a constant convenient velocity such as 2000 rpm. Power is transferred from the engine to the flywheel via shaft 12, clutch 13, shaft 440, clutch 342, shafts 30 and 420 to the input member 402, and impeller 404, all by direct mechanical means. Power is transferred to the turbine 406 by hydrodynamic means and from the turbine 406 directly to the flywheel 20 via shaft 410, gears 26 and 24 and shaft 22.

During this start mode the vehicle will not move if the speed ratio of the V belt drive 70 is adjusted so that the ring gear 46 does not rotate. The fluid coupling 400 allows the impeller 404, which is connected to heat engine 10, to rotate even if the turbine 406, which is connected to the flywheel, is at rest. As torque is transferred from the impeller 404 to the turbine 406, the flywheel will gradually accelerate.

When the flywheel reaches a suitable operating speed, say 8000 rpm, lock up clutch 412 may be engaged so that energy may be transmitted to or from the flywheel 20 without having to pass through the impeller 404 and turbine 406. The lock up fluid coupling 400 is therefore operated in the conventional manner whereby power is transmitted hydrodynamically through the impeller 404 and turbine 406 whenever there is a substantial difference in speed between the impeller 404 and turbine 406, and mechanically at high efficiency through the lock up clutch 412,

whenever the speed of the impeller 404 and turbine 406 are generally equal.

It will also be apparent that the flywheel 20 may be started from rest by an arrangement substantially the same as that illustrated in FIG 9 or in FIG 10. In this case, the lock up fluid coupling 400 would not be used and there would be a direct connection between first pulley 350 and the flywheel 20.

Yet another embodiment of the drive system of the present invention is illustrated in FIG 12. The output shaft 12 of heat engine 10 is colinear with the output shaft 54 of the transmission so that the embodiment of FIG 12 is suitable for a rear wheel drive vehicle.

Referring to FIG 12, the output shaft 12 of heat engine 10 is drivingly connected to a fixed pulley 361 via engine clutch 13 so that when clutch 13 is engaged, the heat engine 10 is drivingly connected to the pulley 361. The fixed pulley 361 is drivingly connected to a second fixed pulley 339 via chain drive 341. The fixed pulley 361 is also drivingly connected to the carrier 41 of planetary gear set 62 via a shaft 370.

The variable pulley 350 is drivingly connected to a second variable pulley 354 via V belt 352. The second variable pulley 354 is drivingly connected to the sun gear 44 of planetary gear set 62 via shaft 34. A multiplicity of planet gears 42 are mounted on the carrier 41. The ring gear 46 is drivingly connected to the transmission output shaft 54 which is in turn connected to the transmission output differential (not shown) and the drive wheels of the vehicle (not shown). A clutch 358 is interposed between the ring gear 46 and the carrier 41 so that when clutch 358 is engaged, the entire planetary gear set 62 rotates together as a single unit.

The variable pulley 350 is drivingly connected to gear 26 via a shaft 420 and gear 26 drives gear 24. Gear 24 is connected to the flywheel 20 via shaft 25 and clutch 23 so that when clutch 23 is engaged, a driving connection is established between the flywheel 20 and the variable pulley 350.

Operation of the embodiment of FIG 12 is substantially the same as the embodiment of FIG 11. Clutch 342 is engaged for operation in the first mode and clutch 358 is engaged for operation in the second mode.

It will be apparent that clutch 23 may be replaced by a lock up fluid coupling. It will also be apparent that the clutch 358 may be interposed between any of the members of the planetary gear set 62.

A further feature of the invention which is particularly applicable to the embodiment of FIG 12 but equally applicable to the other embodiments described herein which incorporate flywheels, is the provision of a highway mode. In the highway mode of operation, the flywheel is disconnected by disengaging clutch 23 while the engine 10 continues to drive the vehicle at relatively high vehicle speeds and relatively low engine speeds. It is particularly advantageous to have the ratio of the engine speed to the vehicle speed (n/V) as low as possible during operation in the second and highway modes in order to optimize fuel economy. According to a preferred embodiment of the invention the value of n/V in the second mode is equivalent to that of a conventional vehicle operating in an overdrive mode.

In order to provide extra engine power needed for passing in the highway mode, the speed ratio of the variable pulleys 350 and 354 is selected so that there exists a condition of substantial synchronization between variable pulley 350 and fixed pulley 339. It is noted that in the highway mode, the engine drives the vehicle directly through shaft 12, clutch 13, shaft 370 and through the locked up planetary gear 62. This arrangement is suitable for normal cruising operation. However, if additional power is required for passing or for climbing a grade, the clutch 342 is engaged and the clutch 358 is disengaged, thereby allowing the engine to operate up to its maximum speed and hence to provide the necessary power.

It is noted that this passing mode arrangement is generally equivalent to the first mode arrangement but is used at relatively high vehicle speeds and when the flywheel is decoupled. It is also noted that shifting into this passing mode takes place relatively quickly since there exists a condition of substantial speed synchronization across clutch 342.

In summary, under normal cruising conditions at relatively high vehicle speeds, the engine drives the vehicle directly at high efficiency and low rotational speed. Whenever additional power is required, the system shifts quickly to the passing mode to provide the required additional power.

A variation of the passing mode is also provided in accordance with an embodiment of the invention. This mode, also known as the low mode or the third mode, is similar to the passing mode except that it can be entered at any vehicle speed to allow the engine to operate at full speed and full power without the assistance of the flywheel in order to enable the vehicle to climb grades.

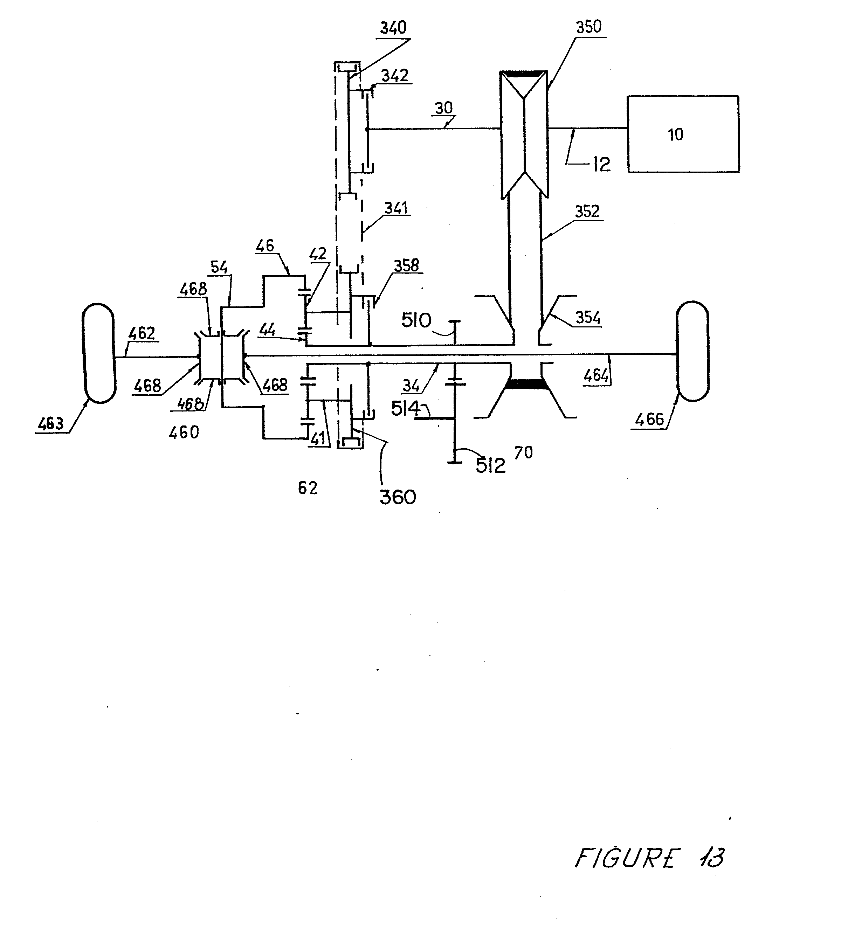

Yet another embodiment of the drive system of the present invention is illustrated in FIG 13, wherein those parts and units having counterparts in the embodiment of FIG 11 are designated by like reference numerals.

In the embodiment of FIG 13, the drive system is implemented without a flywheel. The output crank shaft 12 of heat engine 10 is connected to the input pulley 350. The input pulley 350 is fixedly connected to clutch 342 via shaft 30. Clutch 342 is connected to fixed pulley 340 so that when the clutch 342 is engaged, a driving connection is established between the input pulley 350 and fixed pulley 340. The fixed pulley 340 is connected via a chain drive 341 to the second fixed pulley 360. The second fixed pulley 360 is in turn fixedly connected to the carrier 41 of planetary gear set 62. The carrier 41 has a multiplicity of planet gears 42.

The input pulley 350 is drivingly connected to the output pulley 354 via V belt 352 so that a varying speed ratio between the input pulley 350 and output pulley 354 is obtained. The output pulley 354 is drivingly connected to the sun gear 44 of planetary gear set 62 via shaft 34. The ring gear 46 of planetary gear set 62 is connected to the drive wheels 463 and 465 via differential 460.

A clutch 358 is interposed between the fixed pulley 360 and sun gear 44 so that when the clutch 358 is engaged the planetary gear set 62 rotates as a single unit.

The heat engine 10 is started in the conventional manner with clutches 342 and 358 disengaged. The speed ratio of the input pulley 350 and the output pulley 354 is adjusted so that the speed of the ring gear 46 and hence that of the vehicle is substantially zero.

It is important to note that the speed ratio of the variable V belt drive need not be exact as no torque can be transferred to the vehicle with clutches 342 and 358 disengaged.

A first accessory drive gear 510 is fixedly attached to shaft 34 and a second accessory drive gear 512 is drivingly connected thereto. A shaft 514 is drivingly connected to the vehicle accessories, not shown, such as a generator, power steering, air conditioning compressor, in a conventional manner.

The range of speed variation of shaft 34 and sun gear 44 is limited and hence the size of the accessory components can be reduced and the power wastage at high vehicle speeds may be correspondingly reduced. This structure may be compared with a conventional vehicle drive system wherein the accessories are directly driven by the heat engine 10 and wherein the accessory components must have capacities suitable for meeting performance requirements over the relatively wide range of engine operating speeds, which may extend from 600 rpm at engine idling to 5000 rpm at high vehicle speeds at peak power. It is noted that this type of accessory drive can be connected to the second drive terminal of the differential gear 62 in any of the embodiments illustrated and described in this specification.

34

The embodiment of FIG 13 is suitable for a front wheel drive vehicle because the engine and transmission may be mounted in the transverse position with the output shaft 54 and output differential 460 parallel to the engine.

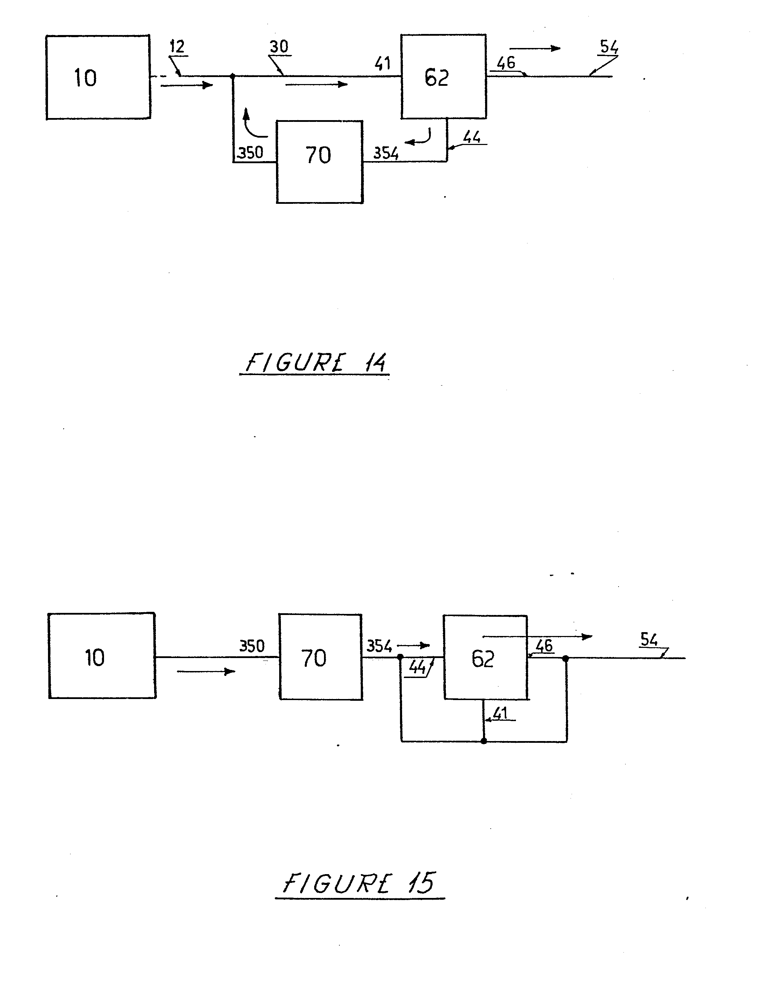

Referring now to FIG 14, there are shown the principal connections and power flow between the engine 10 and output shaft 54 when the system is arranged for operation in a first mode. Referring simultaneously to FIG 13, clutch 342 is engaged, thereby establishing a driving connection between the heat engine 10 and the carrier 41 via shaft 30 and pulleys 340 and 360. Power from the heat engine 10 is also transmitted to the sun gear 44 via variable pulleys 350 and 354. The power to the drive shaft 54 is delivered via the ring gear 46.

Power from heat engine 10 is therefore split into two paths, the first path through the fixed pulleys 340 and 360 and the second path through the variable pulleys 350 and 354. It is noted that zero vehicle speed is achieved by setting the speed ratio between the pulleys 350 and 354 to a value such that the speed of the ring gear 46 is zero. It is also noted that reverse speeds are achieved by adjusting the speed ratio between pulleys 350 and 354 so that ring gear 46 rotates in a reverse direction.

As the vehicle accelerates from rest, the speed of the ring gear 46 increases from zero, while the speed of the sun gear 44 decreases. When the speed of the ring gear 46 reaches the speed of the sun gear 44, the speed of the carrier 41 also reaches the same synchronization speed. When the speeds of all

34

of the elements of the planetary 62 are substantially equal, the system shifts to the second mode of operation by disengaging clutch 342 and engaging clutch 358. The gear shift is particularly rapid and smooth because no parts have to be synchronized during the shift.

Referring now to FIG 15, the power flow between the heat engine 10 and the output shaft 54 is shown for the second mode of operation. Referring simultaneopusly to FIG 13, it is seen that the power from the heat engine 10 is transmitted to the sun gear 44 via shaft 12 and pulleys 350 and 354. With clutch 358 engaged, all elements of the planetary gear 62 are locked together and the planetary gear set 62 rotates as a single block so that power from the sun gear 44 is transmitted directly to the ring gear 46 and thence to the output shaft 54.

The first mode of operation is employed at relatively low vehicle speeds whereby the engine can operate at low speed when low power is required and at high speed when high power is required for accelerating the vehicle. The second mode of operation is employed at higher vehicle speeds and it is particularly advantageous while driving at constant velocity at the higher vehicle speeds as the wide range of the transmission allows the engine to operate at a low speed and consequently high load thereby allowing the engine 10 to operate at good fuel economy.

It will be apparent that the clutch 358 may be disposed between the carrier 41 and the ring gear 46. It will also be apparent that the clutch 358 may be disposed between the ring gear 46 and the sun gear 44. In both cases, the operation of the system is substantially the same as that described for FIG. 13.

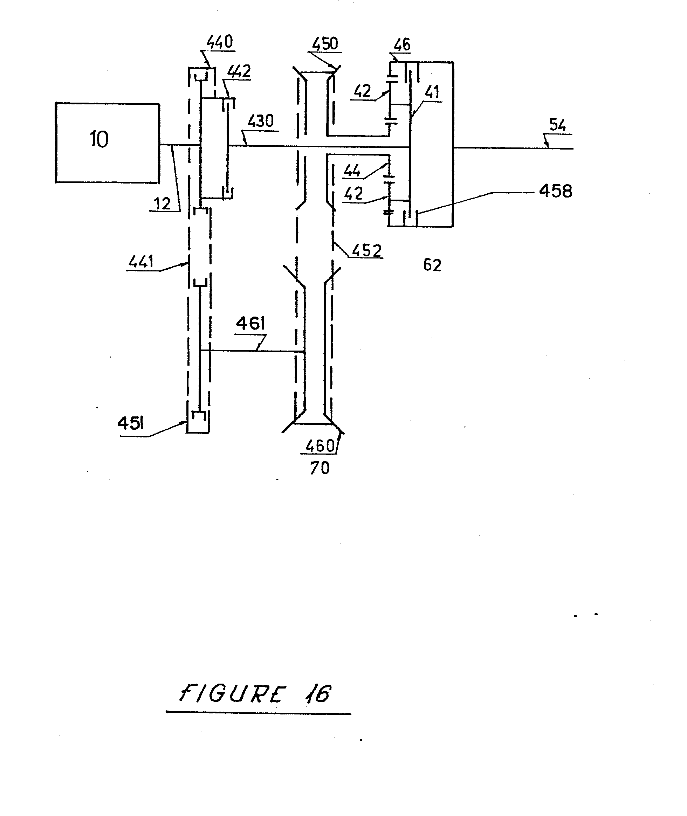

Yet another embodiment of the drive system of the present invention is illustrated in FIG. 16 wherein those parts and units having counterparts in the embodiment of FIG 13 are designated by like reference numerals. The embodiment of FIG. 16 is suitable for a vehicle with rear wheel drive.

Referring now to FIG. 16, the heat engine 10 is connected to fixed pulley 440 via engine output shaft 12. The fixed pulley 440 is drivingly connected to a second fixed pulley 450 via chain drive 441 and pulley 450 is drivingly connected to variable pulley 460 via shaft 461. The variable pulley 460 is connected to a second variable pulley 450 via variable V belt 452 so that a varying speed ratio between pulleys 460 and 450 may be established.

A clutch 442 is connected to fixed pulley 440 so that when clutch 442 is engaged, a driving connection is established between heat engine 10 and carrier 41 via shaft 430, fixed pulley 440 and shaft 12. Variable pulley 450 is drivingly connected to the sun gear 44 and the ring gear 46 is drivingly connected to the output shaft 54 of the transmission. A clutch 458 is interposed between the carrier 41 and the ring gear 46 so that when clutch 458 is engaged, the entire planetary gear set 62 rotates as a single unit.

The operation of the embodiment of Fig. 16 is substantially the same as that of the embodiment of FIG. 13. When clutch 442 is engaged, the heat engine 10 is connected to the carrier 41 via shaft 12, pulley 440, clutch 442 and shaft 430 and

0127986

to the V belt pulley 460, via shaft 12, pulley 440, chain 441, pulley 451 and shaft 461. The second V belt pulley 450 is connected to the sun gear 44 and the ring gear 46 is connected to the output shaft 54. Therefore, the system is arranged for operation in the first mode.

When clutch 458 is engaged, the entire planetary gear set rotates as a single unit and the power from heat engine 10 is transmitted to output shaft 54 via shaft 12, pulley 440, chain 441, second fixed pulley 451, shaft 461, variable pulley 460, V belt 452, and second variable pulley 450 and thence to the locked up planetary gear 62. Therefore the system is arranged for operation in the second mode.

The embodiment of FIG 16 is suitable for a rear wheel drive vehicle because the engine 10 is colinear with the output shaft 54. It will be apparent that the clutch 458 may be interposed between any of the elements of the planetary gear set 62.

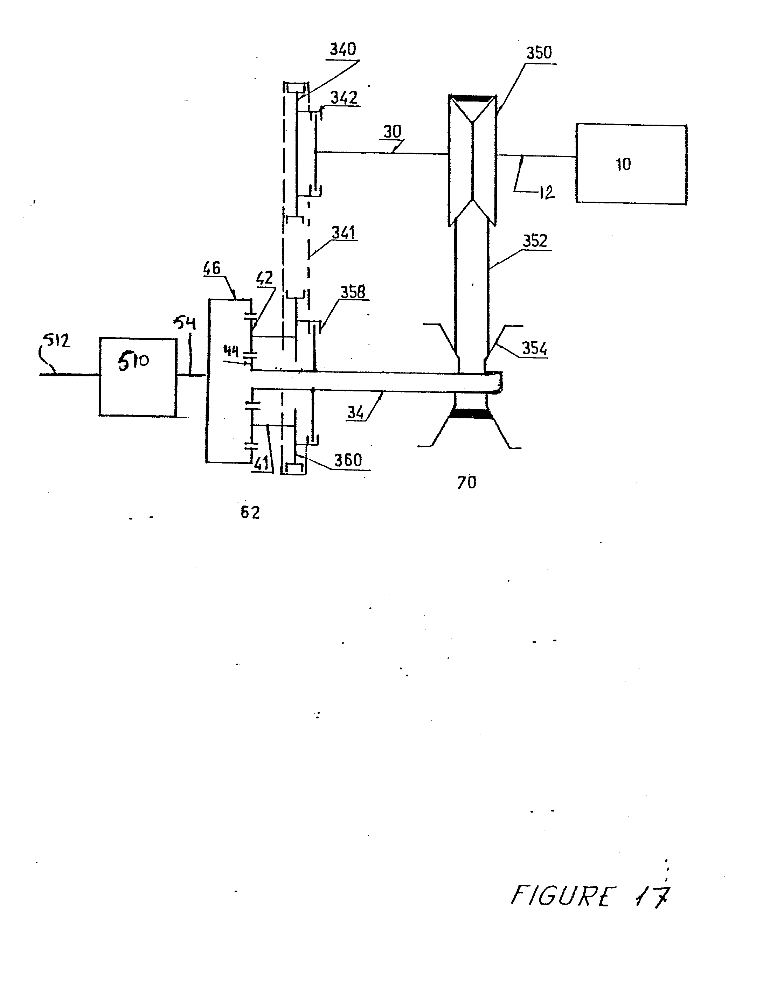

Reference is now made to FIG 17 which illustrates an embodiment of the vehicle drive system which is similar to that illustrated in Fig. 13 except as described hereinbelow. The elements which are common to both figures are labelled using the reference numerals employed in Fig. 13. In the embodiment of FIG 13, the output crank shaft 12 of heat engine 10 is connected to the input pulley 350. The input pulley 350 is fixedly connected to clutch 342 via shaft 30. Clutch 342 is connected to fixed pulley 340 so that when clutch 342 is engaged, a driving connection is established between the input pulley 350 and fixed pulley 340. The fixed pulley 340 is connected via a chain drive 341 to the second fixed pulley 360. The speed ratio between second fixed pulley 360 and fixed pulley 340 is denoted as C. The second fixed pulley 360 is in turn fixedly connected to the carrier 41 of planetary gear set 62. The carrier 41 has a multiplicity of planet gears 42.

The input pulley 350 is drivingly connected to the output pulley 354 via V-belt 352 so that a varying speed ratio between the input pulley 350 and output pulley 354 is obtained. The speed ratio of the output pulley 354 and the input pulley 350 is denoted as BR. The output pulley 354 is drivingly connected to the sun gear 44 of planetary gear set 62 via shaft 34. The ring gear 46 of planetary gear set 62 is connected to a fixed gear reduction 510 via transmission output shaft 54. The ratio of the diameter of ring gear 46 to the diameter of sun gear 44 is denoted as Z. Fixed gear reduction 510 is connected to the drive wheels of the vehicle by shaft 512. The speed ratio of output shaft 54 to shaft 512 is denoted as G.

A clutch 358 is interposed between the fixed pulley 360 and sun gear 44 so that when the clutch 358 is engaged, the planetary gear set 62 rotates as a single unit.

The heat engine 10 is started in a conventional manner with clutches 342 and 358 disengaged. The speed ratio of the input pulley 350 and the output pulley 354 is adjusted so that the speed of the ring gear and hence that of the vehicle is substantially zero.

In order to explain the particular advantages realized from the embodiment of Fig. 17, reference is made to a conventional implementation of a variable V-belt transmission. In such a transmission a heat engine is connected to the input pulley of the V-belt transmission and the output pulley is connected to a fixed reduction ratio apparatus between the output pulley and the drive wheels of the vehicle. The speed ratio of the output pulley to the input pulley is denoted as br and the speed ratio of the output pulley and the drive wheels of the vehicle is denoted as g.

It is a partaicular advantage of the present invention that the value of Z is large enough so that a substantial reduction in torque on the sun gear is achieved. It is a further advantage of this embodiment that the value of G is small enough so that the engine speed is relatively low at relatively high vehicle speeds.

It is apparent that when BR equals C, all of the elements of the differential are rotating at the same speed and a transition between modes 1 and 2 can be accomplished therefore under synchronous conditions by decoupling clutch 342 and coupling clutch 358. The synchronous belt ratio BR is denoted as BRS.

It is a further advantage of the present embodiment that the value of BRS may be chosen so that the operating diameter of the V belt 352 is substantially above its minimum value for all operating conditions in the first mode so that extreme loads on the V-belt are obviated.

The following example will now be considered: the vehicle mass is 1360 Kg., tire radius is 302 mm, 60% of the vehicle mass is on the drive wheels, tire traction coefficient is 1, fixed gear reduction G is equal to 4.6, ratio C is equal to 2, minimum effective V-belt radius is 31.4 mm, maximum effective V-belt radius is 77.2 mm, center distance between pulleys 350 and 354 is 218 mm, ratio Z is equal to 3, and the vehicle is powered by a 2.5 liter gasoline engine.

It is appreciated that the belt ratio BR at vehicle standstill is substantially equal to 2 and the effective radius of the V-belt 352 on pulley 354 is substantially equal to 37 mm at vehicle standstill. It is further appreciated that the maximum torque on the ring gear 46 when the tires slip is substantially equal to 472 Newton-meters (N-m), and the torque on sun gear 44 is substantially equal to 157 N-m. It is further appreciated that the tension in V-belt 352 under these conditions of tire slip is substantially equal to 4220 Newtons (N).

It is further appreciated that the belt ratio BRS at the synchronization point is substantially equal to C which is equal to 2 and that the effective radius of the V belt 352 on pulley 354 is 37 mm. It becomes apparent then that the smallest effective belt radius throughout the first mode of operation is substantially equal to 37 mm.

It is also appreciated that at a vehicle speed of 90 Km/hr, the minimum speed of the engine 10 is substantially equal to 1480 rpm when the transmission is operating at maximum overdrive in the second mode of operation, and that the heat engine 10 can therefore operate very efficiently to provide the required road load.

The following example of a conventional transmission employing the same variable V-belt will now be considered for the purpose of comparison.

The vehicle engine and tire data are identical but the value of g is 5.6.

It becomes apparent that the maximum belt tension when the tires are at the point of slipping is substantially equal to 5030 N and that the minimum engine speed at 90 Km/hr is 1800 rpm, so that the heat engine 10 cannot be operated as efficiently as in the earlier example.

It is appreciated that increasing the value of g decreases the maximum belt tension but at the cost of a further increase in the speed of engine 10 at a vehicle speed of 90 Km/hr.

It is appreciated therefore that both lower maximum belt tension and better fuel economy at higher vehicle speeds can be achieved with the embodiment of the present invention illustrated in Fig. 17.

The various features of the invention have been described hereinabove in detail with reference to diagrams illustrating the construction and operation of specific preferred embodiments of the invention. It is to be clearly understood that many other embodiments of the invention may also be constructed and operated within the scope of the invention. Therefore, the invention is limited only by the claims which follow:

-41a-

The features disclosed in the foregoing description, in the following claims and/or in the accompanying drawings may, both separately and in any combination thereof, be material for realising the invention in diverse forms thereof.

| V | nfw | ne | n14 | n30 | n44 | n41 | n46 | RAGR | n54 |
|---|---|---|---|---|---|---|---|---|---|
| 0 | −8000 | 1387 | 1387 | 2080 | −2080 | −693 | 0 | 1.00 | 0 |
| 10 | −7940 | 1376 | 1376 | 2064 | −1684 | −688 | −190 | .82 | 380 |
| 20 | −7758 | 1345 | 1345 | 2017 | −1257 | −672 | −380 | .62 | 760 |
| 33.3 | −7309 | 1267 | 1267 | 1900 | −633 | −633 | −633 | .33 | 1267 |
| 33.3 | −7309 | 1267 | 1267 | 1900 | −633 | −633 | −633 | .33 | 1267 |
| 40 | −6983 | 1520 | 1210 | 1816 | −760 | −760 | −760 | .42 | 1520 |
| 50 | −6340 | 1900 | 1099 | 1648 | −950 | −950 | −950 | .58 | 1900 |
| 60 | −5452 | 2280 | 945 | 1418 | −1140 | −1140 | −1140 | .80 | 2280 |
| 71 | −4000 | 2698 | 693 | 1040 | −1340 | −1340 | −1340 | 1.29 | 2698 |
| 79 | −4000 | 3000 | 693 | 1040 | −1500 | −1500 | −1500 | 1.44 | 3000 |

C L A I M S          0127986

1.          A vehicle drive system suitable for use with or without a kinetic energy storage capability and comprising:

a   source of rotational energy;

clutch means;

continuously   variable   transmission means defining   an input terminal coupled to said source of rotational energy and an output   terminal; and

differential gear means having a first drive   terminal, selectably   coupled   via   said clutch means   to   said   rotational energy   source,   a   second drive terminal coupled to   said output terminal   of said continuously variable transmission means and   a third drive terminal   coupled to the drive wheels of a vehicle,

said rotational energy source being selectable from   a group including a heat engine and a flywheel.

2.          A   vehicle   drive   suitable for use with or   without   a flywheel and comprising

a source of rotational energy;

clutch means;

continuously   variable transmission means defining   an input   terminal coupled to said source of rotational energy   and an output terminal; and

differential   gear   means,   having   a   first   drive terminal,   selectably   coupled   via   said clutch   means   to   said rotational energy source, a second drive terminal coupled to said output terminal of said continuously variable transmission means,

and a third drive terminal coupled to the drive wheels of the vehicle,

said vehicle drive system being capable of connection in two alternative connection arrangements, wherein in the first arrangement said rotational energy source is selected to be a heat engine and in the second arrangement the rotational energy source is selected to be a flywheel and an engine is connected to said first drive terminal of said differential.

3. A vehicle drive system suitable for use with or without a flywheel and comprising

a source of rotational energy;

clutch means;

continuously variable transmission means defining an input terminal coupled to said source of rotational energy and an output terminal;

differential gear means, having a first drive terminal, selectably coupled via said clutch means to said rotational energy source, a second drive terminal coupled to said output terminal of said continuously variable transmission means, and a third drive terminal coupled to the drive wheels of the vehicle,

said first drive terminal of said differential being arranged to be capable of being coupled to an engine.

4. A vehicle drive system according to any of the preceding claims and also comprising selectable coupling means including:

first means for coupling in a first mode of operation said source of rotational energy to said input terminal of said continuously variable transmission means and to said first drive terminal of said differential gear means, the output terminal of the continuously variable transmission means to said second drive terminal of said differential gear means and said third drive terminal of said differential gear means to the drive wheels of a vehicle; and

second means for coupling in a second mode of operation, said source of rotational energy to said input terminal of said continuously variable transmission means, said output terminal of said continuously variable transmission means to said second drive terminal of said differential gear means, said third drive terminal of said differential gear means to the vehicle wheels and any two of said first, second and third drive terminals of said differential gear means together in locked arrangement, whereby the differential gear means rotates together as a single unit.

5. A vehicle drive system comprising:

kinetic energy storage means;

clutch means;

continuously variable transmission means defining an input terminal coupled to said kinetic energy storage means and an output terminal;

differential gear means, having a first drive terminal, selectably coupled via said clutch means to said kinetic energy storage means by means of a clutch coupling, a second drive terminal coupled to said output terminal of said continuously variable transmission means and a third drive terminal connected to the drive wheels of a vehicle; and

an engine coupled to said first drive terminal of the differential gear means.

6.      A vehicle drive system according to claim 5 and also including:

selectable coupling means including

first means for coupling in a first mode of operation said kinetic energy storage means and said engine to said input terminal of said continuously variable transmission means and to said first drive terminal of said differential gear means, said output terminal of said continuously variable transmission means to said second drive terminal of said differential gear means and said third drive terminal to the drive wheels of a vehicle; and

second means for coupling in a second mode of operation said kinetic energy storage means to said input terminal of said continuously variable transmission means, said engine to said first drive terminal of said differential gear means, said output terminal of said continuously variable transmission means to said second drive terminal of said differential gear means, said third drive terminal of said differential gear means to the vehicle wheels and any two of said first, second and third drive terminals of said differential gear means together in locked arrangement, whereby said differential gear means rotates together as a single unit.

7.      A vehicle drive system according to claim 5 and wherein said kinetic energy storage means comprises a flywheel.

8.      A vehicle drive system according to any of claims 5, 6 and 7 and also comprising third means for coupling in a third mode of operation wherein said kinetic energy storage means is decoupled via selectable connection means from said input terminal of said continuously variable transmission means, said engine is coupled to said input terminal of said continuously variable transmission means and to said first drive terminal of said differential gear means, said output terminal of said continuously variable transmission means to said second drive terminal of said differential gear means and said third drive terminal to the drive wheels of the vehicle.

9.      A vehicle drive system according to any of claims 5 – 8 and also comprising fourth means for coupling in a highway mode of operation wherein said kinetic energy storage means is decoupled via selectable connection means from said input terminal of said continuously variable transmission means, said engine is coupled to said first drive terminal of said differential gear means, said output terminal of said continuously variable transmission means is coupled to said second drive terminal of said differential gear means, said third drive terminal is coupled to the drive wheels of the vehicle, and any two of said first, second and third drive terminals of said differential gear means are coupled together in locked arrangement whereby said differential gear means rotates together as a single unit.

10.      A vehicle drive system according to claim 9 and wherein in said highway mode the speed ratio of said continuously variable transmission means is selected such that there exists substantial synchronization of rotational speeds across said clutch means.

11.      A vehicle drive system according to claim 10 and also comprising fifth means for coupling in a passing mode of operation wherein said kinetic energy storage means is decoupled via said selectable connection means from said input terminal of said continuously variable transmission means, said engine is coupled to said input terminal of said continuously variable transmission and to said first drive terminal of said differential gear means, said output terminal of said continuously variable transmission means is coupled to said second drive terminal of said differential gear means, said third drive terminal is coupled to the drive wheels of the vehicle.

12.      Apparatus according to any of the preceding claims and also comprising accessory drive means coupled to said second drive terminal of said differential gear means.

13.      A vehicle drive system according to any of the preceding claims and wherein the coupling between said third drive terminal of said differential gear means and the drive wheels of the vehicle comprises a permanent coupling.

0127986

14. A vehicle drive system according to any of preceding claims 4, 6, 7, 8, 9, 10 and 11 and wherein said second means for coupling in a second mode of operation comprises differential gear clutch means operative to selectably connect any two of said first, second and third drive terminals of said differential gear means together in locked arrangement.

15. A vehicle drive system comprising:

a source of rotational energy;

first and second clutch means;

continuously variable transmission means defining an input terminal coupled to said source of rotational energy and an output terminal; and

differential gear means having a first drive terminal selectably coupled via said first clutch means to said input terminal, a second drive terminal coupled to said output terminal of said continuously variable transmission means and a third drive terminal coupled to the drive wheels of the vehicle, and

wherein said second clutch means is operative to selectably connect any two of said first, second and third drive terminals of said differential gear means whereby, when said second clutch means is engaged, said differential gear means is locked together and rotates as a single unit.

16. A vehicle drive system according to claim 15 and also comprising selectable coupling means including:

first means for coupling in a first mode of operation said source of rotational energy to said input terminal of said continuously variable transmission means and to said first drive terminal of said differential gear means, said output terminal of said continuously variable transmission means to said second drive terminal of said differential gear means and said third drive terminal of said differential gear means to the drive wheels of a vehicle; and

second means for coupling in a second mode of operation, said source of rotational energy to said input terminal of said continuously variable transmission means, said output terminal of said continuously variable transmission means to said second drive terminal of said differential gear means, said third drive terminal of said differential gear means to the vehicle wheels and any two of said first, second and third drive terminals of said differential gear means together via said second clutch means in locked arrangement, whereby the differential gear means rotates together as a single unit.

17. A vehicle drive system according to claim 16 and wherein said first drive terminal of said differential gear means is a carrier, said second drive terminal is a sun gear, said third drive terminal is a ring gear and wherein the ratio Z of said ring gear to said sun gear is sufficiently high to produce a substantial reduction of torque on said output terminal of said continuously variable transmission in said first mode of operation.

18. A vehicle drive system according to any of claims 15 -

17 and also comprising fixed gear reduction means defining a gear reduction ratio G between said ring gear and the drive wheels of said vehicle, said fixed gear reduction means being sufficiently low in order to allow the engine to operate at a relatively low speed when the vehicle is at a relatively high speed.

19. A vehicle drive system according to either of claims 17 and 18 and also comprising fixed ratio drive means connecting said input terminal via said first clutch means to said carrier and defining a speed ratio C of said carrier to said input terminal.

20. A vehicle drive system according to any of claims 16 - 19 and being operative such that transitions between said first and second modes of operation occur substantially synchronously.

21. A vehicle drive system according to claim 20 and wherein said synchronized transitions between said first and second modes of operation occur at a speed ratio BR between said output terminal and said input terminal of said continuously variable transmission which is equal to C.

22. A vehicle drive system according to claim 1 and wherein said speed ratio BR at which said synchronous transitions take place is other than close to the extreme low value of the range of available ratios BR of said continuously variable transmission.

23. A vehicle drive system according to any of the preceding claims and wherein said continuously variable transmission means comprises a variable V-belt transmission.

24.     A vehicle drive system according to any of claims 1 - 22 and wherein said continuously variable transmission means comprises a variable traction drive.

FIGURE 1

FIGURE 2

FIGURE 3

FIGURE 4

FIGURE 5

FIGURE 6

FIGURE 7

FIGURE 8

FIGURE 9

FIGURE 10

FIGURE 11

FIGURE 12

FIGURE 13

_FIGURE 14_

_FIGURE 15_

FIGURE 16

0127986

FIGURE 17